# EUROPEAN PATENT SPECIFICATION

(11) **EP 2 400 198 B1**
(45) Date of publication and mention of the grant of the patent: **31.07.2013**
(21) Application number: 10159034.7
(22) Date of filing: 01.04.2010
(51) Int. Cl.: F16L 3/26

(54) **Improved fire resistant suspension system**
Verbessertes feuerfestes Aufhängungssystem
Système de suspension ignifuge amélioré

(43) Date of publication of application: 28.12.2011
(73) Proprietor: Vergokan, 9700 Oudenaarde (BE)
(72) Inventor: Ballet, Geert, 9660 Brakel (BE); Coppens, Kurt, 9680 Maarke-Kerkem (BE)
(74) Representative: Caers, Raphael Frans Ivo

(56) References cited:
- DE-A1- 3 317 799
- DE-A1- 19 808 991
- DE-U1- 29 907 295
- US-A- 2 535 427
- US-A- 5 039 039

## Description

### FIELD OF THE INVENTION

The present invention relates to the field of ducts such as for electrical cables or other utility provisions. More specifically, the invention relates to an improved fire resistant suspension system anchorable to a ceiling and including supporting brackets or similar profile sections supporting cable duct systems, such as for traffic tunnels, more particularly road or train tunnels. The invention is particularly concerned with an improved support bracket for such suspension system.

### BACKGROUND OF THE INVENTION

Fires in tunnels are notorious for their effects and their difficulty in being fought. It is of particular importance that utility functionalities, such as lighting, signaling and communicating equipment remain operable as much as possible. Accidental fires and experimental fires in tunnels have even shown that the realized temperatures (up to 1370°C) are significantly higher than with building fires (less than 1100°C). In tunnels, the utilities and utility connections are typically suspended high against the wall and more typically from the ceiling. This is quite convenient and low cost in terms of construction, offers easy access for inspection and maintenance, and readily brings the least disturbance to the activities in the tunnel, such as the train or road traffic. The drawback is that such tunnel equipment becomes readily and fully exposed to the heat in case of a fire. It is therefore important that the suspension systems for such utilities and utility connections maintain their integrity for a minimum of time under the severe conditions of a fire in the tunnel.

The materials, designs and constructions used for utilities and utility lines in tunnels are therefore subjected to and certified under tight standards and codes, and adherence to those codes and standards is strictly enforced by many authorities. One such standard that may be applied is DIN 4102: 'Brandverhalten von Baustoffen und Bauteilen", section 12: 'Circuit integrity maintenance of electric cable systems, requirements and testing". A more specific norm under preparation is for instance ASTM WK23821 'New Test Methods for Tunnel Fire Resistance".

Standard DIN 4102-12 distinguishes between standard systems compliant with particular requirements and non-standard systems. Standard systems may be installed with any type of electrical cables which have themselves been certified for circuit integrity maintenance. Non-standard systems may only be installed with the cables of the type and supplier with which they have been tested.

The testing requirements for standard suspension systems within DIN 4102-12, for the installation of cables on cable ducts or gutters, specify a distance between supports of 1200 mm and that the support itself consists of a hanging support with bolted or welded crossbars or brackets and with in the proximity of the tip of the bracket a supplementary suspension connection fixing the bracket to a threaded bar. The threaded bar and the fixing of the bracket thereto are to prevent the bracket from slipping down the bar and to prevent the hanging support from bending under the weight of the cable duct or gutters, especially when heated. The width of the cable ducts is prescribed to be 400 mm, and the width of the cable gutters is prescribed as 300 mm. The brackets may also be bolted to a wall instead of to the hanging support.

DE 33 17 799 A1 discloses a bracket for supporting a duct system according to the preamble of claim 1.

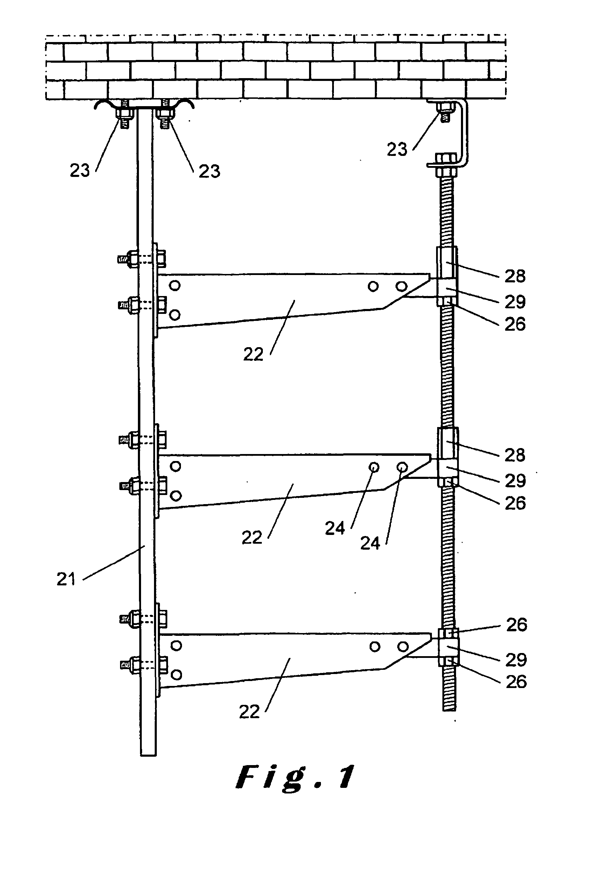

A conventional standard suspension system according to DIN 4102-12 may be described with reference to Figure 1. The hanging support 21 is anchored to the ceiling using two bolts 23 screwed into fire resistant pegs and requiring two holes to be drilled into the ceiling. The anchor for the threaded bar to the ceiling is fixed at the appropriate distance from the hanging support, and uses a third bolt 23 and fire resistant peg, which requires a third hole to be drilled into the ceiling, and this at the right distance from the two other holes drilled for anchoring the hanging support. One or more brackets 22 are bolted to the hanging support 21, each time by means of two bolts and nuts. Usually after placing the cable ducts or gutters onto the brackets 22, the tip of each bracket 22 is secured to the threaded bar. This is achieved by bringing the threaded bar into position, bringing it up through the (unthreaded) sleeve 29 which is bolted by bolts 24 to the tip of the bracket 22 and by bolting the end of the threaded bar to the anchor point by means of two nuts. The position of the unthreaded sleeve 29 from the bracket 22 is then fixed onto the threaded bar by screwing one securing nut 26 above the fixing point and a second securing nut 26 below the fixing point. Usually washers are provided with each of the nuts. As the threaded bars may come with different diameters, depending on the diameter of the threaded bar, appropriate nuts, washers and coupling sleeves have to be provided.

The standard suspension system may comprise up to 3 brackets. If more than one bracket is to be provided, the threaded bar is for convenience of assembly provided in sections, which are in the field being connected to each other each time by a threaded coupling sleeve 28. The lengths of the sections of the threaded bar may be chosen such that the coupling sleeve 28 may replace one of the securing nuts 26, typically the nut above the fixing point.

Bringing the threaded bar into position, bolting it to the anchoring point, bringing the nuts into place for fixing the position of the sleeve of the bracket onto the threaded bar, and in particular the assembly of the sections of threaded bar in case there are more than one bracket to be secured, is very time consuming. Drilling each time three holes into the ceiling, at the correct distances from each other, requires precision and adds to the complexity and time required for installing the suspension system. Bolting the brackets with two bolts to the hanging support is another complexity addition, even if this assembly is prefabricated in the shop, when it reduces the convenience in transporting the assembly and anchoring the assembly to the ceiling.

As tunnels may be several kilometers long, such as for instance the 50 km 'Channel tunnel" between England and France, and thus require several thousands of fire resistant suspension systems. There is thus a need for a more convenient and less time consuming design of the suspension system, whereby it is preferred that the suspension system continues to qualify as a standard suspension system within norm DIN 4102-12.

The present invention aims to obviate or at least mitigate the above described problem and/or to provide improvements generally.

### SUMMARY OF THE INVENTION

According to the invention, there is provided an improved bracket for supporting a duct system as part of a fire resistant suspension structure anchorable to a ceiling, as defined in any of the relevant accompanying claims. The invention further provides for a fire resistant suspension structure anchorable to a ceiling, comprising the improved bracket according to the invention.

The invention provides for a bracket for supporting a duct system as part of a fire resistant suspension structure anchorable at least at one anchor point to a ceiling, the bracket being provided at one end with means for attachment to a wall or a support hanging from the ceiling and at the other end with means for attachment to a bar hanging from the ceiling, characterised in that the means for attachment to the bar comprises a sleeve for surrounding the bar, and a bolt screwed through a hole in the wall of the sleeve for engaging with the bar thereby fixing the position of the bracket with respect to the bar.

We have found that, with the bracket according to the present invention, the position of the tip of the bracket may readily be fixed relative to the bar by screwing and tightening the single bolt through the hole in the sleeve against the bar. This brings the advantage that only one bolt needs to be tightened for fixing and securing the position of the tip of the bracket relative to the bar. Another advantage is that the bar does not need to be threaded at the point for attaching the bracket, which otherwise means that the bar needs to be threaded over its entire length, but the bar may now only be threaded where needed for connecting to the anchor point against the ceiling. It brings the further advantage that this means of attachment of the bracket to the bar is suitable for bars of different diameters, as long as the bar fits inside the sleeve of the bracket. There is no need for providing the nuts and washers corresponding to the diameter of the bar. A further advantage is that, in case the suspension system comprises more than one bracket, the bar may be provided as one single bar, and does not need to be provided in sections which then need to be assembled in the field. The need to provide for coupling sleeves that correspond to the bar diameter has thereby also become obsolete. The bar may also be brought into position after all ducts and cables have been provided. And if extra cables are to be installed after the initial assembly has been finalised, the bar may readily be removed such that the extra cables may be pulled into place over long distances, thereby avoiding the need to weave the cables each time behind each of the bars.

The invention further provides for a fire resistant suspension assembly, system or structure, anchorable at least at one anchor point to a ceiling, comprising the improved bracket according to the invention. The suspension system enjoys the advantages brought by the improved bracket as described above, in particular the simplicity and faster assembly possible in the field, in particular when the suspension system comprises more than one bracket.

### BRIEF DESCRIPTION OF THE DRAWINGS

Figure 1 shows a side view of a conventional standard suspension system according to DIN 4102-12.
Figure 2 shows a side view of an improved bracket according to the present invention.
Figure 3 shows a perspective view of a sleeve for attachment to the tip of the bracket of the present invention.
Figure 4 shows a perspective upward view of a detail of a preferred fire resistant suspension system according to the present invention, wherein the bracket is attached to a vertical support by only one bolt.
Figure 5 shows a perspective upward view of the assembly of Figure 4 from a different angle.
Figure 6 shows a perspective view of an L-shaped support according to a preferred embodiment of the present invention.
Figure 7 shows a perspective upward view of the L-shaped support of Figure 6 being anchored with its second arm to a ceiling with two anchor points, and the bar for (unshown) securing the tip of the bracket being attached to the second arm of the L-shaped support.
Figure 8 shows a perspective view of the detail of an attachment of the bar to the second arm of the L-shaped support of Figure 7 using a sliding nut.
Figure 9 shows a perspective view of the full assembly of a preferred suspension system according to the invention comprising three brackets each supporting a cable duct.

### DETAILED DESCRIPTION

In a preferred embodiment of the suspension system of the present invention, the bar is a threaded bar. This brings a first advantage that the suspension system comprising the bracket according to the present invention may certify as a standard suspension system according to DIN 4102-12, and thus may be installed with any type of cable which itself is certified for integrity maintenance. A threaded bar brings a further and second advantage, in that the position of the bolt, with respect to the bar and when engaging with the bar, may be more tightly fixed for the same torque, because the contact surface is smaller as compared to a non-threaded bar. For the same tightening torque on the bolt this creates a higher contact pressure on that contact surface, and thus a lower risk that the bolt would move along the surface of the bar.

In one embodiment of the present invention, the bolt has a hexagonal head. This brings the advantage that the tools for tightening the bolt are the same as those used for installing and assembling the suspension system.

In an embodiment of the present invention, the sleeve at the tip of the bracket has a cylindrical shape. Cylindrical sleeves are easier to shape compared to other shapes. The cylindrical shape also makes it more convenient for fixing around a cylindrical bar, such as a threaded bar, and pressing the bar with the bolt through the hole in the sleeve against the wall of the sleeve opposite the hole.

In another embodiment of the present invention, the hole in the sleeve extends radially through the wall of the sleeve. This provides the most convenient and secure way for fixing the sleeve by a bolt through the hole in the sleeve onto a cylindrical bar, such as a threaded bar.

In another embodiment of the present invention, the bolt is a selftapping bolt. This brings the advantage that the hole in the sleeve does not need to be provided with a predrawn thread, but that the thread is drawn during the final assembly, when the bolt is introduced, screwed and tightened.

In yet another embodiment, the bolt is pointed at the tip. This brings the advantage that the contact surface between the bolt and the bar is even smaller and for the same tightening force thus brings a higher contact pressure on that surface.

In an embodiment of the present invention, the sleeve is welded or bolted to the bracket.

The bracket according to the invention preferably is suitable to form part of a fire resistant suspension system for supporting a duct system, such as an electrical cable duct system. The invention therefore also provides for a fire resistant suspension system, anchorable at least at one anchor point to a ceiling, comprising at least one bracket according to the present invention.

In an embodiment of the present invention, the fire resistant suspension system further comprises a bar hanging from the ceiling and wherein the bolt screwed through the wall of the sleeve of the bracket is engaged with the bar and has been tightened with a torque of at least 3 Nm, more preferably at least 5 Nm, even more preferably at least 6 or even 7 Nm, yet more preferably at least 8 and even 9 Nm and typically about 10 Nm. The applicants prefer to apply a tightening torque of at most 25 Nm, preferably at most 20 Nm, more preferably at most 15 Nm, yet more preferably at most 13 or even 12 Nm, and even more preferably at most 11 Nm. The applicants have found that such torque provides sufficient fixing strength of the tip of the bracket to the bar such that the fixing point does not slide under the severe conditions of a tunnel fire, and the suspension system passes the tests prescribed in DIN 4102-12.

In another embodiment of the present invention, the bolt screwed through the wall of the sleeve of the bracket has a diameter of at least 4 mm, preferably at least 5 mm, more preferably at least 6 mm, and optionally at most 12 mm, preferably at most 11 mm, more preferably at most 10 mm or 9 mm, yet more preferably at most 8 mm and most preferably at most 7 mm. In a preferred embodiment the bolt has a diameter of 6 mm and is tightened with a torque of from 8 to 10 Nm.

In a preferred embodiment of the present invention, the bar of the fire resistant suspension system is a threaded bar. This brings a first advantage that the suspension system may certify as a standard suspension system according to DIN 4102-12, and thus may be installed with any type of cable which itself is certified for integrity maintenance. It brings a further and second advantage that the position of the bolt, with respect to the bar and when engaging with the bar, may be more tightly fixed for the same torque, because the contact surface is smaller and for the same tightening force thus brings a higher contact pressure on that surface, which causes a higher elastic deformation of the contact surfaces and hence a tighter attachment.

In an embodiment of the present invention, the fire resistant suspension system further comprises a vertical support hanging from the ceiling, whereby the bracket is attached to the vertical support, optionally by at least one bolt, further optionally by two bolts and preferably by only one bolt, or optionally by at least one preformed hook formed as an integral part at the end of the bracket and which hook is adapted to and grips into at least one opening provided in the vertical support hanging from the ceiling.

The bracket of the present invention may preferably be provided with a footplate which is suitable for being anchored to a wall with at least one anchor point, optionally with two anchor points, and which at the same time is suitable for attaching to the vertical support hanging from a ceiling with at least one bolt, optionally with two bolts and preferably with only one bolt.

In an embodiment of the present invention, the fire resistant suspension system further comprises an L-shaped support of which a first arm acts as a vertical support for one end of the bracket and the second arm is suitable for anchoring to a ceiling at least at one anchor point, preferably at two anchor points. Most conveniently the two arms are connected to each other simply by welding, but any other suitable means may be conceived by the person skilled in the art for connecting the two arms and creating the L-shaped support according to the present invention. The first arm is preferably provided with holes at regular distances which conveniently correspond to the distance between the holes in the footplate of the bracket, such that the bracket may be bolted to the first arm by means of one or more than one bolt, if so desired. In another embodiment, the second arm is provided with at least one, preferably at least two holes through which the second arm may be anchored to a ceiling. This design allows for anchoring the suspension system, including the provision for securing the tip of the bracket, to a ceiling with less than three anchor points, optionally with only one anchor point but preferably with two anchor points. This brings the advantage that less than three holes need to be drilled in the ceiling, and less than three fire resistant pegs are sufficient for anchoring the support system to a ceiling. The lower number of holes to be drilled represents a significant time saver in installing the support systems in the tunnel. The lower number of fire resistant pegs required for the installation is a significant cost saver.

More preferably, the second arm is provided with a series of more than two holes at regular distances from each other, even more preferably with oval-shaped holes for anchoring the L-shaped support to a ceiling. This brings the advantage that a lower accuracy is demanded of the relative locations of the holes that are drilled into the ceiling of the tunnel for anchoring the support system. This means less repeats and/or recycling in the drilling procedure for the anchoring.

In a preferred embodiment of the present invention, the suspension system comprises a bar, which preferably is a threaded bar, and the bar is attached to the second arm of the L-shaped support. This brings the advantage that the need for a separate anchor point for the bar is dispensed with. This saves one anchor point for each suspension system, and means a time saver and a cost saver as already explained above.

In an embodiment of the suspension system according to the present invention, the attachment of the bar, which preferably is a threaded bar, to the second arm is longitudinally moveably fixed to the second arm. This is preferably provided by the second arm having a profile open in the direction of the bar, which opening is provided with inwardly facing retaining edges, and by the bar being suitably provided with an element that is retainable by the edges of the profile of the second arm and which is moveable along the length of the second arm, preferably the element being a sliding nut suitable for sliding inside the profile of the second arm. This feature brings the advantage that the support system according to the present invention is adaptable to brackets of different lengths, and therefore the same support system may be used with different brackets.

In a preferred embodiment of the suspension structure according to the present invention, the attachment of the bar to the second arm of the L-shaped support is provided with means for securing the location of the attachment along the length of the second arm. This brings the advantage that the bar may be fixed into a particular position along the second arm, which provides a more solid support system. A second advantage is that, if and when desired, the means for securing the location may be undone and the bar may at one end readily be disconnected from the rest of the support system. This means for securing the location is preferably provided by a securing nut screwed onto a threaded end of the bar and more preferably by a mounting element engaging with the surface of the second arm and being secured against the surface by the securing nut, more preferably with a washer being provided in between the securing nut and the mounting element.

In an embodiment of the suspension system according to the present invention, wherein the second arm has a profile open in the direction of the bar with inwardly facing retaining edges, the mounting element preferably has edges gripping around the walls of the open profile of the arm suitable for restraining the profile, at the point of attachment of the bar, from further opening the opening in the direction of the bar.

Preferred embodiments of the present invention are now further illustrated by a detailed description and the figures provided in the drawing section.

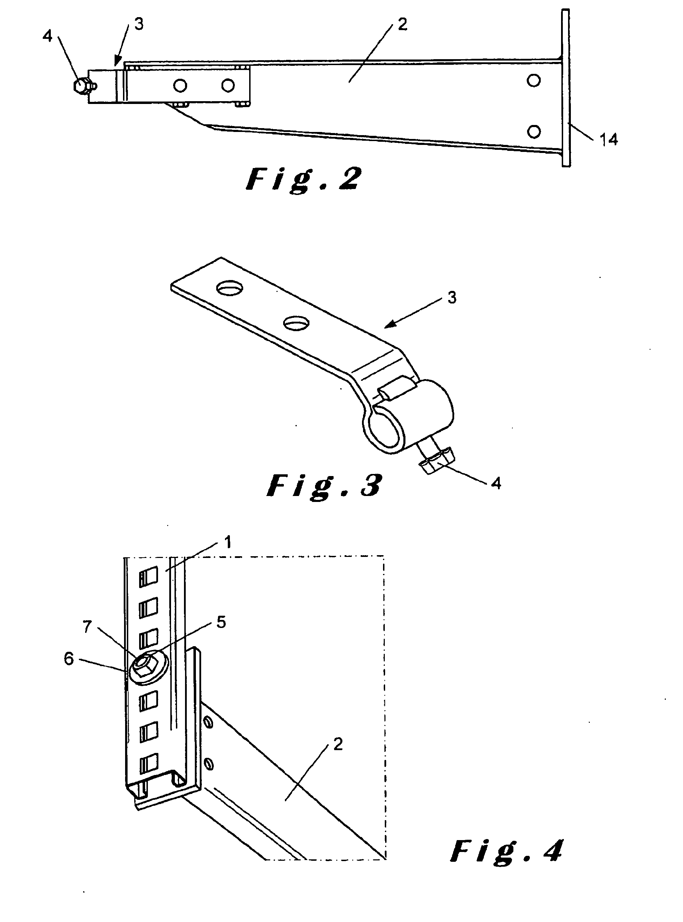

Figure 2 shows a bracket 2 according to the present invention, to which tip a sleeve element 3 is welded or bolted, in the wall of the sleeve element 3 is a hole through which a bolt 4 is screwed. At the bottom end of the bracket 2 is a footplate 14 in which there are provided the necessary hole or holes for anchoring the bracket to a wall or for attaching the bracket to a vertical hanging support of a suspension system.

Figure 3 shows the detail of the sleeve element 3 with the bolt 4. The sleeve itself is closed firmly by a weld.

Figure 4 shows the footplate of the bracket 2 which is bolted to a vertical support by means of one bolt 5, one nut 7 and one washer 6.

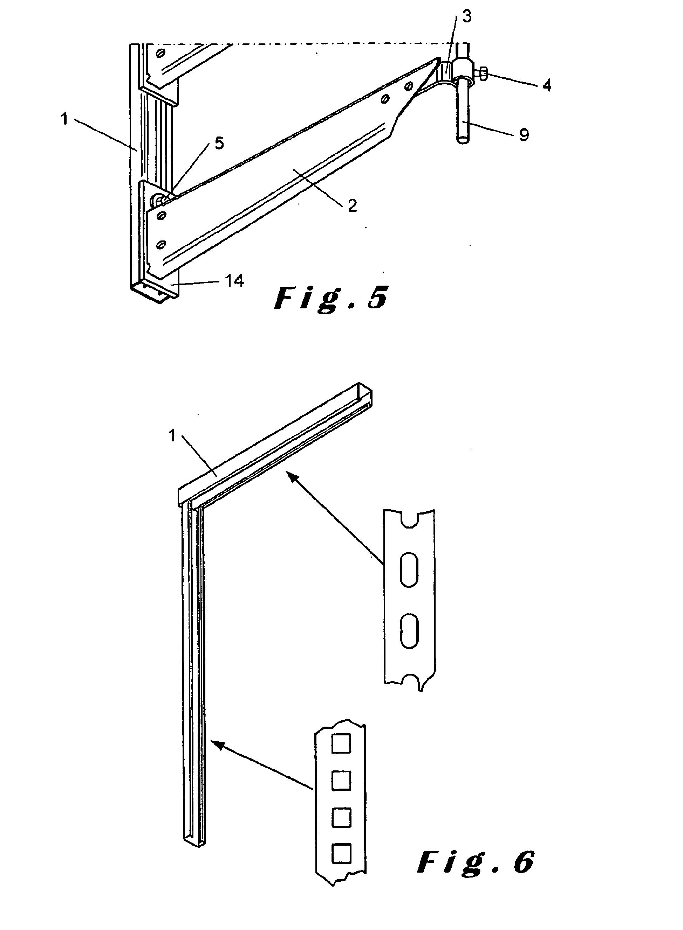

Figure 5 shows the entire bracket 2 with at the tip end its sleeve element 3 and the bolt 4 engaged through the wall of the sleeve with the bar 9. At the foot end of the bracket, footplate 14 is bolted with a single bolt 5 to the vertical arm of support 1.

Figure 6 shows an L-shaped support 1 suitable for a preferred embodiment of the present invention. The two arms are here provided with a series of holes. The holes in the second arm of the L-shaped support, intended for being anchored to the ceiling, are preferably oval-shaped holes. The holes in the first arm, intended for supporting the footplate of the bracket, are preferably not elongated, but square or round.

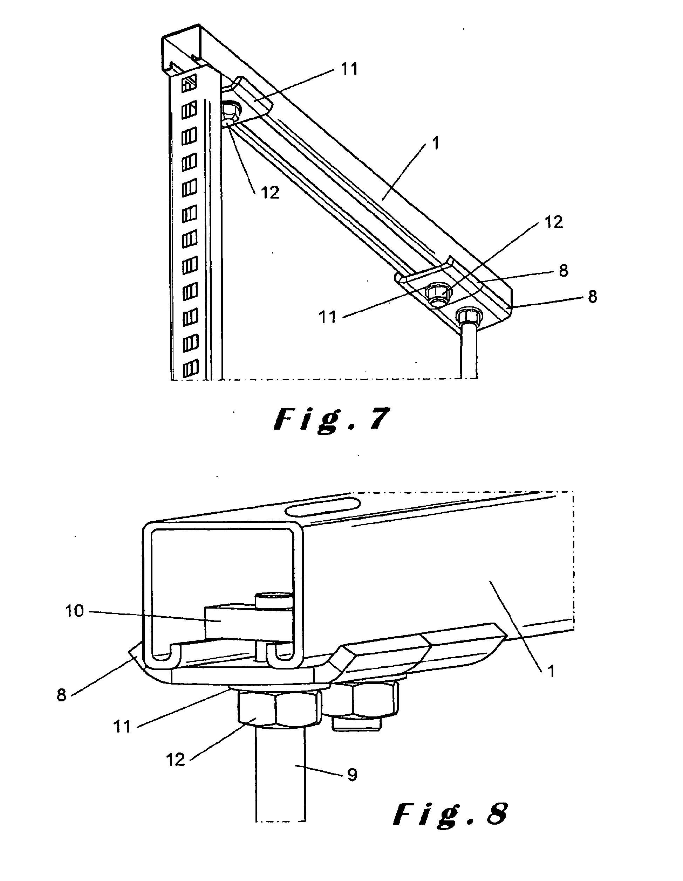

Figure 7 shows an L-shaped support 1 with its second arm anchored to the ceiling by means of two bolting means, consisting of nuts 12 with washers 11 screwed onto the threaded bolts of the fire resistant pegs stuck in the ceiling. The second arm has a profile which is open downwardly and which has inwardly facing retaining edges. The nuts 12 and washers 11 push mounting elements 8 against the surface of the second arm, and the mounting elements 8 have edges gripping around the walls of the open profile of the arm and restrain the profile, at the anchor point, from further opening.

Figure 8 shows in one embodiment of the present invention how the bar 9, which preferably is a threaded bar, may be longitudinally moveably fixed to the second arm of the L-shaped support. The bar is provided with a sliding nut 10 suitable for being retained by the inwardly facing retaining edges of the profile of the second arm. The position of the bar 9 with respect to the second arm may be secured with securing nut 12 and washer 11 pushing a mounting element 8 against the surface of the second arm, and the mounting element 8 has edges gripping around the walls of the open profile of the second arm and restraining the profile, at the attachment point of the bar 9, from further opening.

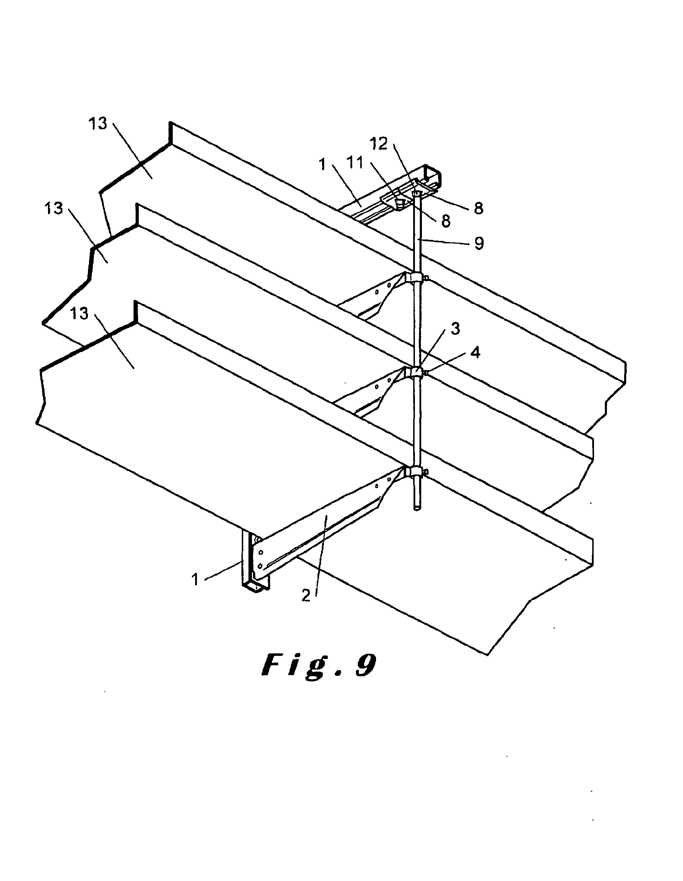

Figure 9 shows the full assembly of a preferred suspension system according to the invention comprising three brackets 2 each supporting a cable duct 13. The brackets 2 are bolted at their foot end to the first arm of L-shaped support 1 and have at their tip side sleeve elements 3 with the bolts 4 for attachment to the bar 9, preferably a threaded bar. The bar 9 is fixed to the second arm of L-shaped support 1 and the attachment comprises a mounting element 8 having gripping edges for retaining the shape of the profile of the second arm and preventing further opening thereof. The second arm of the L-shaped support 1 is anchored to a ceiling by nut 12 and washer 11 over a bolt which is fixed into a fire resistant peg stuck into a hole drilled into the ceiling, the nut 12 and washer 11 retaining a second mounting element 8 for providing a retaining function similar to the mounting element 8 provided where bar 9 is fixed to the second arm of the L-shaped support 1.

Having now fully described this invention, it will be appreciated by those skilled in the art that the invention can be performed within a wide range of parameters within what is claimed, without departing from the scope of the invention as defined by the claims.

## Claims

1. A bracket (2) for supporting a duct system (13) as part of a fire resistant suspension system anchorable at least at one anchor point to a ceiling, the bracket (2) being provided at one end with means (14) for attachment to a wall or a support hanging from the celling and at the other end with means (3) for attachment to a bar (9), **characterised in that** the means (3) for attachment to the bar comprises a sleeve for surrounding the bar, and a bolt (4) screwed through a hole in the wall of the sleeve for engaging with the bar (9) thereby fixing the location of the bracket (2) with respect to the bar (9).

2. The bracket according to claim 1 **characterised in that** the sleeve has a cylindrical shape.

3. The bracket according to claim 1 or 2 **characterised in that** the hole extends radially through the wall of the sleeve.

4. The bracket according to any preceding claim **characterised in that** the bolt (4) is a self-apping bolt.

5. The bracket according to any preceding claim **characterised in that** the sleeve is welded or bolted to the bracket (2).

6. The bracket according to any preceding claim further comprising a footplate (14) which is suitable for being anchored to a wall with at least one anchor point, preferably with at least two anchor points, and which at the same time is suitable for attaching to a vertical support, hanging from a ceiling, with at least one bolt (5), optionally with two bolts, and preferably with only one bolt.

7. A fire resistant suspension system anchorable at least at one anchor point to a ceiling, the suspension system comprising at least one bracket (2) according to any preceding claim.

8. The fire resistant suspension system according to claim 7 further comprising a bar (9) hanging from the ceiling and wherein the bolt (4) screwed through the wall of the sleeve of the bracket (2) is engaged with the bar (9) and has been tightened with a torque of at least 3 Nm, typically about 10 Nm.

9. The fire resistant suspension system according to claim 8 wherein the bar (9) is a threaded bar.

10. The fire resistant suspension system according to any one of claims 7 to 9 further comprising a vertical support hanging from the ceiling and wherein the bracket (2) is attached to the vertical support.

11. The fire resistant suspension system according to any one of claims 7-10 further comprising an L-shaped support (1) of which a first arm acts as a vertical support for one end of the bracket (2) and the second arm is suitable for anchoring to a ceiling at least at one anchor point.

12. The fire resistant suspension system according to claim 11 comprising a bar (9) wherein the bar (9) is attached to the second arm of the L-shaped support (1).

13. The fire resistant suspension system according to claim 12 wherein the attachment of the bar (9) to the second arm is longitudinally moveably fixed to the second arm.

14. The fire resistant suspension system according to claim 13 wherein the attachment of the bar (9) to the second arm is provided with means for securing the location of the attachment along the length of the second arm.

15. The fire resistant suspension system according to claim 14 wherein the second arm has a profile with a gap in the direction of the bar (9) with inwardly facing retaining edges and wherein the means for securing the location of the attachment along the length of the second arm has edges gripping around the walls of the open profile of the arm suitable for restraining the profile, at the point of attachment of the bar, from further opening the gap.

## Patentansprüche

1. Winkel (2) zum Tragen eines Leitungssystems (13) als Teil eines feuerfesten Aufhängungssystems, welches an mindestens einem Festpunkt an einer Decke zu verankern ist, wobei der Winkel (2) an einem Ende mit einem Mittel (14) für eine Befestigung an einer Wand oder einem von der Decke hängenden Träger und an dem anderen Ende mit einem Mittel (3) für eine Befestigung an einer Stange (9) bereitgestellt wird, **dadurch gekennzeichnet, dass** das Mittel (3) für die Befestigung an der Stange eine Muffe zum Umgeben der Stange umfasst und eine Schraube (4) für einen Eingriff in die Stange (9) durch ein Loch in der Wand der Muffe geschraubt ist, wodurch die Stelle des Winkels (2) in Bezug auf die Stange (9) fixiert wird.

2. Winkel nach Anspruch 1, **dadurch gekennzeichnet, dass** die Muffe eine zylindrische Form aufweist.

3. Winkel nach Anspruch 1 oder 2, **dadurch gekennzeichnet, dass** sich das Loch radial durch die Wand der Muffe erstreckt.

4. Winkel nach einem der vorhergehenden Ansprüche, **dadurch gekennzeichnet, dass** es sich bei der Schraube (4) um eine selbstschneidende Schraube handelt.

5. Winkel nach einem der vorhergehenden Ansprüche, **dadurch gekennzeichnet, dass** die Muffe an den Winkel (2) geschweißt oder geschraubt ist.

6. Winkel nach einem der vorhergehenden Ansprüche, welcher ferner eine Bodenplatte (14) umfasst, welche dafür geeignet ist, mit mindestens einem Festpunkt, vorzugsweise mit mindestens zwei Festpunkten an einer Wand verankert zu werden, und welche gleichzeitig dafür geeignet ist, mit mindestens einer Schraube (5), gegebenenfalls mit zwei Schrauben, vorzugsweise mit nur einer Schraube, einen vertikalen Träger zu befestigen, der von einer Decke hängt.

7. Feuerfestes Aufhängungssystem, welches an mindestens einem Festpunkt an einer Decke zu verankern ist, wobei das Aufhängungssystem mindestens einen Winkel (2) nach einem der vorhergehenden Ansprüche umfasst.

8. Feuerfestes Aufhängungssystem nach Anspruch 7, welches ferner eine Stange (9) umfasst, die von der Decke hängt, und wobei die durch die Wand der Hülse des Winkels (2) geschraubte Schraube (4) in die Stange (9) eingreift und mit einem Drehmoment von mindestens 3 Nm, typischerweise etwa 10 Nm, angezogen worden ist.

9. Feuerfestes Aufhängungssystem nach Anspruch 8, wobei es sich bei der Stange (9) um eine Gewindestange handelt.

10. Feuerfestes Aufhängungssystem nach einem der Ansprüche 7 bis 9, welches ferner einen vertikalen Träger umfasst, der von der Decke hängt, und wobei der Winkel (2) an dem vertikalen Träger befestigt ist.

11. Feuerfestes Aufhängungssystem nach einem der Ansprüche 7 bis 10, welches ferner einen L-förmigen Träger (1) umfasst, von dem ein erster Arm als vertikaler Träger für ein Ende des Winkels (2) fungiert und der zweite Arm zur Verankerung an einer Decke an mindestens einem Festpunkt geeignet ist.

12. Feuerfestes Aufhängungssystem nach Anspruch 11, welches eine Stange (9) umfasst, wobei die Stange (9) an dem zweiten Arm des L-förmigen Trägers (1) befestigt ist.

13. Feuerfestes Aufhängungssystem nach Anspruch 12, wobei die Befestigung der Stange (9) an dem zweiten Arm in Längsrichtung beweglich an dem zweiten Arm fixiert ist.

14. Feuerfestes Aufhängungssystem nach Anspruch 13, wobei die Befestigung der Stange (9) an dem zweiten Arm mit einem Mittel zum Feststellen der Befestigungsstelle entlang der Länge des zweiten Arms versehen ist.

15. Feuerfestes Aufhängungssystem nach Anspruch 14, wobei der zweite Arm ein Profil mit einer Lücke in Richtung der Stange (9) mit nach innen gerichteten Rückhaltekanten aufweist und wobei das Mittel zum Feststellen der Befestigungsstelle entlang der Länge des zweiten Arms Kanten aufweist, die um die Wände des offenen Profils des Arms herum greifen und dafür geeignet sind, das Profil an dem Befestigungspunkt der Stange davor zurückzuhalten, die Lücke weiter zu öffnen.

## Revendications

1. Console (2) pour supporter un système de conduits (13) faisant partie d'un système de suspension ignifuge pouvant être ancrer au moins en un point d'ancrage à un plafond, la console (2) étant pourvue à une extrémité d'un moyen (14) pour la fixation à une paroi ou à un support pendant du plafond et à l'autre extrémité d'un moyen (3) pour la fixation à une barre (9), **caractérisée en ce que** le moyen (3) pour la fixation à la barre comprend un manchon pour entourer la barre, et un boulon (4) vissé à travers un trou dans la paroi du manchon pour entrer en prise avec la barre (9) fixant ainsi l'emplacement de la console (2) par rapport à la barre (9).

2. Console selon la revendication 1, **caractérisée en ce que** le manchon a une forme cylindrique.

3. Console selon la revendication 1 ou 2, **caractérisée en ce que** le trou s'étend radialement à travers la paroi du manchon.

4. Console selon une quelconque revendication précédente, **caractérisée en ce que** le boulon (4) est un boulon autotaraudeur.

5. Console selon une quelconque revendication précédente, **caractérisée en ce que** le manchon est soudé ou boulonné à la console (2).

6. Console selon une quelconque revendication précédente comprenant en outre une plaque de base (14) qui est appropriée pour être ancrée à une paroi par au moins un point d'ancrage, de préférence par au moins deux points d'ancrage, et qui en même temps est appropriée pour être fixée à un support vertical, pendu au plafond, par au moins un boulon (5), en option par deux boulons, et de préférence par un seul boulon.

7. Système de suspension ignifuge pouvant être ancré au moins en un point d'ancrage à un plafond, le système de suspension comprenant au moins une console (2) selon une quelconque revendication précédente.

8. Système de suspension ignifuge selon la revendication 7 comprenant en outre une barre (9) pendant du plafond et dans lequel le boulon (4) vissé à travers la paroi du manchon de la console (2) est en prise avec la barre (9) et a été serré avec un couple d'au moins 3 Nm, typiquement d'environ 10 Nm.

9. Système de suspension ignifuge selon la revendication 8 dans lequel la barre (9) est une barre filetée.

10. Système de suspension ignifuge selon l'une quelconque des revendications 7 à 9 comprenant en outre un support vertical pendant du plafond et dans lequel la console (2) est fixée au support vertical.

11. Système de suspension ignifuge selon l'une quelconque des revendications 7 à 10 comprenant en outre un support (1) en forme de L dont un premier bras agit comme un support vertical pour une extrémité de la console (2) et le deuxième bras est approprié pour être ancré à un plafond au moins en un point d'ancrage.

12. Système de suspension ignifuge selon la revendication 11 comprenant une barre (9), dans lequel la barre (9) est fixée au deuxième bras du support (1) en forme de L.

13. Système de suspension ignifuge selon la revendication 12 dans lequel la fixation de la barre (9) au deuxième bras est fixée de manière longitudinalement mobile au deuxième bras.

14. Système de suspension ignifuge selon la revendication 13 dans lequel la fixation de la barre (9) au deuxième bras est pourvue de moyens pour fixer l'emplacement de la fixation le long de la longueur du deuxième bras.

15. Système de suspension ignifuge selon la revendication 14 dans lequel le deuxième bras a un profil avec un écart dans la direction de la barre (9) avec des bords de retenue orientés vers l'intérieur et dans lequel le moyen pour fixer l'emplacement de la fixation le long de la longueur du deuxième bras a des bords enserrant les parois du profil ouvert du bras appropriés pour empêcher le profil, au point de fixation de la barre, d'agrandir d'avantage l'écart.
